(19) Europäisches Patentamt / European Patent Office / Office européen des brevets

(11) **EP 1 798 529 B1**

(12) **EUROPEAN PATENT SPECIFICATION**

(45) Date of publication and mention
of the grant of the patent:
**09.08.2017  Bulletin 2017/32**

(51) Int Cl.:
***G01F 1/66*** *(2006.01)*

(21) Application number: **06026189.8**

(22) Date of filing: **18.12.2006**

(54) **Ultrasonic gas flow meter**

Ultraschallgasdurchflussmessgerät

Débitmètre à ultrasons pour gaz

(84) Designated Contracting States:
**AT BE BG CH CY CZ DE DK EE ES FI FR GB GR
HU IE IS IT LI LT LU LV MC NL PL PT RO SE SI
SK TR**

(30) Priority: **16.12.2005  GB 0525752**

(43) Date of publication of application:
**20.06.2007  Bulletin 2007/25**

(73) Proprietor: **Landis+Gyr Limited
Stockport
SK3 0RT (GB)**

(72) Inventor: **Paxton-White, Michael
Ripponden
Halifax
HX6 4NY (GB)**

(74) Representative: **IPrime Rentsch Kaelin AG
Dreikönigstrasse 7
Postfach
8022 Zürich (CH)**

(56) References cited:
**US-A1- 3 623 363     US-A1- 4 583 410**

**Description**

FIELD OF THE INTENTION

The present invention relates to gas meters and, in particular, relates to ultra-sonic gas meters including apparatus and methods of timing the passage of ultra-sonic signals along a measurement path.

BACKGROUND TO THE INVENTION

In addition to the long-established bellows gas meters in the domestic gas meter industry, ultrasonic gas flow meters are also used for gas flow measurement. Speed measurement devices have long been proposed which measure the speed of a liquid relative to the device by measuring the time of flight of an acoustic signal in both directions between first and second transducers and deriving, from the times of flight, the relative speed of the liquid. Such devices have been proposed for, inter alia, measuring the speed of a ship through the water (e.g. as described in US 3,898,878) or measuring the flow rate of liquid in a pipe (e.g. as described in US 3,329,017).

In the case of ultrasonic gas measurement systems, which were first commercially developed during the late 1980's, to measure the flow of gas along a measurement path in a tube, there is provided fluid speed measuring apparatus comprising first and second spaced transmitter and receiver means for transmitting and receiving signals. With no flow of gas through the tube, then the time taken for the sound pulse to travel from the transmitter to the receiver will be the known speed of sound in the gas. With gas flowing in the tube in the direction from the transmitter to the receiver, then the time taken for the pulse will be faster as it is carried along with the gas. Conversely, when gas is flowing in the direction from the receiver towards the transmitter, then the time taken for the pulse to travel will be slower than if it were in static gas. The pulse travel time is dependant upon the distance between the transmitter and receiver and also the velocity of the gas. The accuracy of time measurement required is dependant upon resolution of the flow velocity required.

In the application of gas flow measurement for household or industrial use, then the distance between transmitter and receiver is small, of the order of a few centimetres, due to the limited space available in the equipment, therefore in order to achieve accurate measurements pulse transmission timings in the order of nanoseconds are required. To ameliorate this shortcoming and to improve accuracy / reduce unit cost, then there may be a separate transmitter and receiver assemblies to effect measurement along a single path in one direction; there may be a pair of co-operating transceivers / a single transceiver acting in conjunction with a reflector along a single measurement path in two directions. Typically, the transmitter means is arranged to generate a tone burst signal, which signal includes a phase change and said receiver means is arranged to sense said phase change to provide a timing marker for the received signal.

Certain prior systems comprise a measurement apparatus having a linear amplifier, connected to a high-power, fixed-frequency oscillator, which is driven with a control voltage of a suitably selected amplitude behaviour to obtain amplitude modulation of the oscillator output voltage. This arrangement has the disadvantage that it becomes complicated and costly if it is required to generate high power, ultrasonic transmission pulses in accordance with a predetermined amplitude behaviour with sufficient accuracy. In many applications it is necessary to measure very short time intervals, to a very high resolution. One reason for the relatively slow up-take of ultrasonic gas meters, despite their improved accuracy and lack of moving parts is the overall increase in unit cost. As described above single transceivers may be employed to achieve cost reduction, but the acoustic devices are but one part of a gas measurement system. Measurement circuitry is bespoke and complicated. Microprocessors within the measurement circuitry are adapted for reltively low production runs and therefore mass-production cost savings cannot easily be realised.

US-A-4,583,410 discloses a system for determining a time of travel of ultrasonic impulses in a fluid between a transmitter and a receiver. For coarse measuring of the time, a number of pulses in a sequence of clock pulses is being counted. A negative rising ramp voltage is generated at the end of the Nth period after the reception of a signal. A rate of rise of that ramp is varied until the point where it reaches zero coincides with the time of reception. The remaining time of travel between the Nth period and the time of reception is then derived from the rate of rise.

US-A-3,623,3 63 deals with an ultrasonic flow meter measuring differences of times of travel of brief signals in a fluid between two transducers. The signals are distanced from each other with a fixed time interval caused by clock pulses and their propagation direction is alternated every time interval, i.e. cycle. The clock impulses trigger a gate separating transmission signals from reception signals, and a synchronous generation of rectangular pulses. An integrating circuit converts the rectangular pulses into trapezoidal voltages having a constant slope as well as predetermined maximum and minimum values. The speed of the fluid is derived from the different trapezoidal voltages pertaining to the respective time of arrival of two reception signals of opposing propagation directions.

OBJECT OF THE INVENTION

The present invention seeks to provide an improved apparatus and method for measuring very small time intervals. The present invention also seeks to provide an apparatus and method for measuring very small time intervals using readily available microprocessors whereby to provide low cost yet efficient timers for use in ultrasonic equipment. The present invention also seeks to provide an improved ultrasonic gas meter.

STATEMENT OF THE INVENTION

In accordance with a first aspect of the invention, there is provided an ultra-sonic gas flow rate measurement device, the measurement device comprising a measurement path; first and second ultra-sonic transducer elements operable to, respectively, transmit and receive an ultra-sonic pulse measurement signal across the measurement path; wherein there is a electrical control circuit coupled to the first and second transducer elements and operable to determine the time that an ultrasonic pulse measurement signal takes to traverse the measurement path, whereby to determine a rate of flow of gas; wherein the control circuit includes: i) a pulse signal generator, and ii) a square wave generator to produce signals of duration 2T; wherein the pulse signal causes the first ultra-sonic signal generator to transmit an ultra-sonic pulse measurement signal, which ultra-sonic pulse measurement signal is received by the second ultra-sonic transducer to provide a receive signal; and a timing circuit comprises a ramp signal generator and a sample and hold circuit such that the ramp signal generator is coupled to the square wave generator for generating a corresponding continuous ramp signal having a ramp waveform; that the sample and hold circuit is coupled for receiving the ramp signal and the pulse signal and / or the receive signal; in that that the control circuit is operable to determine the time t that the ultra-sonic measurement signal takes to traverse the measurement path using $t = (dt1 + nT + dt2)$, where $dt1$ is an interval of time, if any, between the pulse signal (ii) and a first occurrence of square wave transition determined from a value of a characteristic of the partial square wave transition at the time of transmission of the ultra-sonic measurement signal; $nT$ is a whole number (n) of half wave periods (T) as determined by the number of square wave signal transitions occurring before the receive signal (iii); and $dt2$ is an interval of time between the receive signal and the last square wave transition determined from value of a characteristic of the partial square wave transition at the time of reception of the ultra-sonic measurement signal, and that the periods of time $dt1$ and/or $dt2$ are determined from a value of the ramp waveform upon reception of the pulse signal (ii) and / or the receive signal (iii), respectively.

Conveniently the microprocessor generates square wave pulses at a frequency of the order of tens of MHz. For example, if a square wave frequency of generation is 10MHz, the time period T would be 50nS, which in conjunction with a microcontroller with a resolution of 10bits can provide a voltage resolution of 1/1024. Whist a square wave is conveniently of a 50/50 duty cycle, other duty cycles are possible.

The ultra-sonic measurement signal can be transmitted concurrent with a transition in the square wave, whereby the measurement signal is received by the second ultra-sonic transducer, wherein a whole number (n) of half wave periods (T) as determined by the number of square wave signal transitions is summed with an interval (d2) of time determined from a characteristic of the partial square wave transition to enable the determination of the duration of the ultra-sonic measurement pulse across the measurement path (nT + dt2).

The ultra-sonic measurement signal can be received concurrent with a transition in the square wave, whereby the measurement signal is received by the second ultra-sonic transducer, wherein an interval of time (dt1) corresponding to the time from transmitting an ultra-sonic pulse to a first occurrence of square wave transition as determined from a characteristic of the partial square wave transition is summed with a whole number (n) of half wave periods (T) as determined by the number of square wave signal transitions to enable the determination of the duration of the ultra-sonic measurement pulse across the measurement path (dt1 + nT).

Conveniently the ramp signal generator is a ramp voltage signal generator and wherein the characteristic of the partial square wave transition is voltage, the value of the voltage being integrated whereby to determine an interval (dt) of time. Since the time interval "dt" is in proportion to the voltage, then the time can be resolved to 50nS, which provides an accuracy of approximately 50pS. Thus the present invention provides an easily realisable timing circuit for inclusion in an ultra-sonic flow meter for gases.

Conveniently, the device can determine the minimum and maximum voltages across the measurement circuit whereby to account for drift in the charging circuit over time and for variations in temperature.

In accordance with another aspect of the invention, there is provided a method of determining the time of passage of an ultra-sonic measurement pulse through a measurement cell, according to claim 8 of the appended claims.

The present invention obviates the requirement for a microprocessor using bespoke and expensive electronic circuits. Thus the present invention provides a simple implementation using a single microprocessor or microcontroller and some additional low cost electronic components to provide an apparatus and method of time interval measurement, for use in measurement of gases wherein the time interval is short, of the order of picoseconds.

BRIEF DESCRIPTION OF THE FIGURES

For a better understanding of the present invention, reference will now be made, by way of example only, to the Figures as shown in the accompanying drawing sheets, wherein:-

Figure 1 illustrates an arrangement of key parts to perform time measurement in an ultrasonic meter;

Figure 2 illustrates a timing diagram for an ultra-sonic measurement; and,
Figure 3 illustrates a portion of the timing diagram shown in Figure 2.

Detailed description of the Preferred Embodiments

There will now be described, by way of example only, the best mode contemplated by the inventor for carrying out the present invention. In the following description, numerous specific details are set out in order to provide a complete understanding to the present invention. It will be apparent to those skilled in the art, that the present invention may be put into practice with variations of the specific.

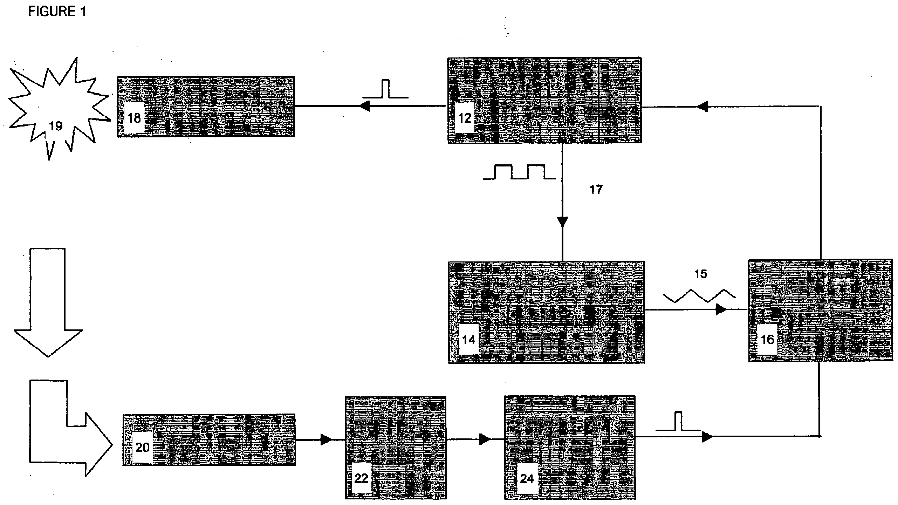

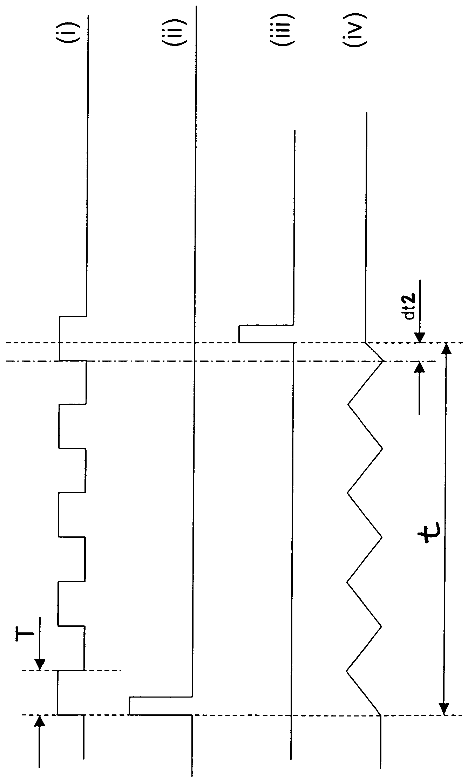

Referring to Figure 1, there is shown an overview of the principles of ultrasonic gas rate of flow measurement A microcontroller 12 is operable to generate a square wave signal. In use, the square wave signal is applied to a first capacitor (not shown) which is subject to alternate charging and discharging with a constant current in the ramp generator 14 to produce a 'saw tooth' waveform. This waveform signal is applied via an electronic switch onto a second capacitor (also not shown) such that the voltage on the second capacitor tracks that of the first capacitor, whereby to form a sample and hold circuit 16. Meanwhile, the microcontroller 12 causes the transmitter 18 to generate a pulse 19 at a known time interval from an edge of the square wave. It should be noted that whilst it is not necessary to synchronise the pulse to this edge, it is convenient to assume that they are synchronised, which is the case in this example. The pulse is directed through a measurement cell, typically defined by a constant uniform section of piping to provide a tube through which the gas can flow, the microcontroller 12 waits for the received pulse to be received by a second, receive transducer 20. During this time it is possible for the microcontroller 12 to count the number of signal waveform transitions as provided by the ramp pulse generator 14 to gain a coarse time interval measurement, as will be more clearly understood with reference to Figure 2.

Upon the pulse being received by the receive transducer, amplifier 22 is provided to amplify the received signal, if necessary, whereby it is of sufficient amplitude so that it can be processed by the microcontroller 12. Subsequently, the signal is fed to the sample and hold circuit 16 to operate the electronic switch operable to connect first or second capacitors in the sample and hold circuit, and then to the microcontroller 12. As soon as the switch is opened, then the second capacitor ceases to charge and discharges in line with the first and the voltage on the second capacitor remains at the level upon opening of the switch.

The microcontroller 12 is programmed to count the square wave transitions (which are employed to form the ramp voltage signal) upon receipt of the received pulse as determined by the coarse time interval. The microprocessor then determines the position in time by integration of the square waveform voltage to form a ramp waveform voltage - this is equivalent to the portion of time identified as dt2 on the ramp voltage timing diagram (iv). Addition of coarse time nT and dt2 provides an accurate time t corresponding to a duration of the measurement pulse between the first and second transducers.

The second capacitor linearly and alternately charges and discharges between minimum and maximum voltage edges of the square wave to provide a ramp voltage wave form. With the knowledge of the minimum and maximum voltages and the voltage attained on the second capacitor when the pulse was received then using simple mathematical interpolation enables calculation of the time that the pulse was received relative to an edge of the square wave.

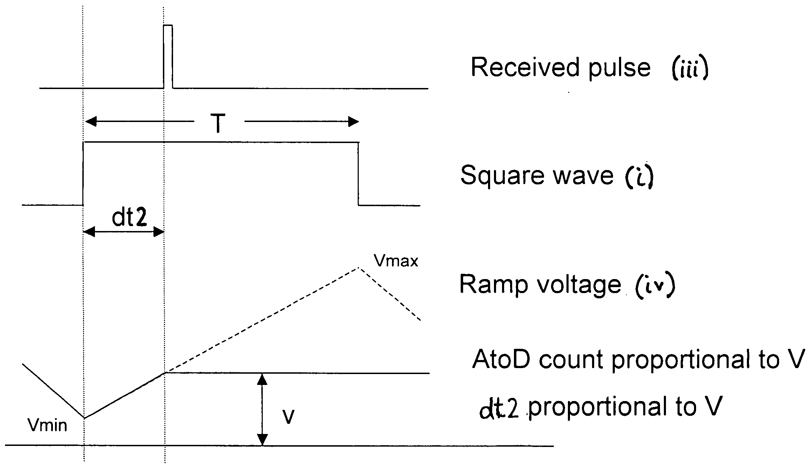

Referring now to Figure 3, which shows a detailed view of the timing signals (identified as signals (i) - (iv) per Figure 2) at time of receipt, it can be seen that if the microprocessor can generate a square wave at 10MHz, then the time period for each half cycle would be 50nS. If the A/D converter, in the microcontroller, is specified with a resolution of 10bits, and the ramp voltage is going between the minimum convertible voltage and the maximum convertible voltage of the A/D converter, then it is possible to resolve the voltage to a resolution of 1/1024. As the time interval 'dt' is proportional to the voltage, then the time, dt, can similarly be resolved to 50nS x 1/1024, which approximates to an accuracy of approximately 50pS, which meets the required levels of accuracy. It will be appreciated that measurements in an ultra-sonic gas meter determine a value for the change of the signal delay of the ultra sonic pulse through the gas path caused by the velocity of the gas flow. The velocity of the gas for any given flow rate through the meter is dependent upon the dimensions of the cross section of the measurement tube. That is to say, for a small domestic meter the measuring tube would be quite small to give measurably high gas velocity at flow rates up to ~14 cubic meters per hour, while a commercial meter would have a large cross-sectional area to cope with much greater flow rates of gas but with similar maximum gas velocities.

Thus it will be appreciated that the present invention allows the use of simple, low cost and easy to source components in the manufacture of a high precision clock signal. In particular, in order to measure the voltage on the capacitor, the microprocessor employs an Analogue to Digital (A/D) converter, as are readily available as part of many typical low cost microcontrollers. Using the voltage on the second capacitor, the microprocessor can calculate the time between an edge of the square wave and the received pulse, which time period is summed with a coarse time interval determined by counting waveform transitions of the square wave pulse or ramp voltage, whereby to calculate the overall time interval to a high precision. With a reduction on the cost of a significant part of an ultra-sonic fluid flow meter, the advantages of reliability and simplicity of such meters can be more economically be realised.

It will be appreciated that in order to determine the amount of compensation to be made for drift in the charging circuit over time and due to variations in temperature, the microprocessor will need to know the maximum and minimum voltages achieved on the second capacitor. These voltages could be measured either during the time between pulse transmission and reception or afterwards. To conveniently determine this, the microprocessor can control the electronic switch that acts between the first and second capacitor such that the opening of the switch is synchronised with an edge of the square wave, this being the point at which the voltage on the second capacitor is reversed having achieved its maximum or minimum. It would also be possible to specify other methods of determining synchronisation or, indeed, not relying upon such synchronisation and another mechanism could be applied such as the provision of a further A/D converter connected directly to the first or second capacitor and again make a voltage measurement synchronised to the edge of the square wave. Furthermore, the square signal may not necessarily be of a 50/50 duty cycle, and could be, for example, a 60/40 duty cycle.

The skilled person will realise that in the event that the transmitted signal is not transmitted concurrent with a change in charging/discharging of the square wave, then a measurement of the time period before the start of the first whole measurement of half a waveform must be performed in addition to the measurement of the partial half-waveform at the end of the timing cycle. This can almost double the processing requirement.

Thus the present invention provides a convenient and simple apparatus and method of measuring very short time intervals to a high resolution using simple electronic circuitry and a low cost microcontroller in an ultrasonic gas meter application, which is equally suitable for both domestic and industrial gas meter applications.

**Claims**

1. An ultra-sonic gas flow rate measurement device, the measurement device comprising:

    a measurement path;
    first (18) and second (20) ultra-sonic transducer elements operable to, respectively, transmit and receive an ultra-sonic pulse measurement signal (19) across the measurement path;
    an electrical control circuit, coupled to the first and second transducer elements and operable to determine the time that the ultra-sonic pulse measurement signal (19) takes to traverse the measurement path, whereby to determine a rate of flow of gas;
    wherein the control circuit includes:

a pulse signal generator for generating a pulse signal (ii), and a square wave generator to produce square wave signals (i) of duration 2T;
wherein the pulse signal causes the first ultra-sonic signal generator (18) to transmit an ultra-sonic pulse measurement signal (19), which ultra-sonic pulse measurement signal is received by the second ultra-sonic transducer (20) to provide a receive signal (iii); and
a timing circuit including a ramp signal generator (14) and a sample and hold circuit (16);

**characterised in that** the ramp signal generator (14) is coupled to the square wave generator for generating a corresponding continuous ramp signal (iv) having a ramp waveform;
**in that**
the sample and hold circuit (16) is coupled for receiving the ramp signal (iv) and the pulse (ii) signal and / or the receive signal; **in that**
the control circuit is operable to determine the time t that the ultra-sonic measurement signal (19) takes to traverse the measurement path using

$$t = dt1 + nT + dt2,$$

where

   dt1 is an interval of time, if any, between the pulse signal (ii) and a first occurrence of square wave transition determined from a value of a characteristic of the partial square wave transition at the time of transmission of the ultra-sonic measurement signal (19);
   nT is a whole number (n) of half wave periods (T) as determined by the number of square wave signal transitions occurring before the receive signal (iii); and
   dt2 is an interval of time between the receive signal and the last square wave transition determined from value of a characteristic of the partial square wave transition at the time of reception of the ultra-sonic measurement signal (19), and **in that**

the ramp signal generator (14) is a ramp voltage signal generator and wherein the characteristic of the partial square wave transition is voltage, the value of the voltage of the partial square wave being integrated to produce the ramp voltage signal (iv).

**2.** A device according to claim 1 wherein the ultra-sonic measurement signal (19) is transmitted concurrent with a transition in the square wave (i), whereby dt1 =0; and wherein the time t that the ultra-sonic measurement signal takes to traverse the measurement path is determined from t = nT + dt2.

**3.** A device according to claim 1 wherein the ultra-sonic measurement signal (19) is received concurrent with a transition in the square wave (i), whereby dt2 =0, and the time t that the ultra-sonic measurement signal takes to traverse the measurement path is determined from t = dt1 + nT.

**4.** A device according to any one of claims 1 to 3, wherein the ramp voltage signal (iv) is provided by a capacitor which is alternately charged and discharged in a linear fashion.

**5.** A device according to any one of claims 1 to 3, wherein the minimum (Vmin) and maximum (Vmax) voltages are periodically determined to allow for changes due to temperature and / or ageing.

**6.** A device according to any one of claims 1 to 5, wherein the square wave pulse (i) is not of a 50/50 duty cycle.

**7.** A device according to any one of claims 1 to 6, wherein the device is a domestic utility meter.

**8.** A method of measuring the rate of gas flow in an ultra-sonic gas flow rate measurement device comprising

first (18) and second (20) ultra-sonic transducer elements operable to, respectively, transmit and receive an ultra-sonic pulse measurement signal (19) across a measurement path;
an electrical control circuit, coupled to the first and second transducer elements and operable to determine the time that an ultra-sonic pulse measurement signal takes to traverse the measurement path, whereby to determine a rate of flow of gas, and a timing circuit including a ramp signal generator (14) and
a sample and hold circuit (16);
the method comprising the steps of:

generating a pulse signal (ii) and generating a square wave (i) of duration 2T;
transmitting by means of the first ultra-sonic transducer element (18) the ultra-sonic pulse measurement signal across the measurement path;
receiving the ultra-sonic pulse (19) measurement signal by means of the second ultra-sonic transducer (20) to provide a receive signal (iii);
**characterised by the steps of:**

coupling the ramp signal generator (14) to the square wave generator for generating a corresponding continuous ramp signal (iv) having a ramp waveform;
coupling the sample and hold circuit (16) for receiving the ramp signal (iv) and the receive signal (iii);
operating the control circuit to determine the time t that the ultra-sonic measurement signal (19) takes to traverse the measurement path using t = dt1 + nT + dt2, where
dt1 is an interval of time, if any, between transmitting the pulse signal and a first occurrence of square wave transition determined from a value of a characteristic of the partial square wave transition at the time of transmission of the ultra-sonic measurement signal (19);
nT is a whole number (n) of half wave periods (T) as determined by the number of square wave signal transitions occurring before the receive signal (iii); and dt2 is an interval of time between the receive signal (iii) and the last square wave transition determined from a value of a characteristic of the partial square wave transition at the time of transmission at the time of reception of the ultra-sonic measurement signal (19),
wherein the ramp signal generator (14) is a ramp voltage signal generator and wherein the characteristic of the partial square wave (i) transition is voltage, the method further including, the step integrating the value of the partial square wave voltage (i) as determined upon completion of the measurement cycle to produce the ramp voltage signal (iv), and determining therefrom the respective interval of time dt1 and / or dt2.

**9.** A method according to claim 8, wherein a transition of the square wave pulse (i) is correlated in time with the transmission of the ultrasonic measurement pulse signal (19), such that dt1 = 0 and wherein the time t that the ultra-sonic measurement signal takes to traverse the measurement path is determined from t = nT + dt2.

**10.** A method according to claim 8, wherein a transition of the square wave pulse (i) is correlated in time with the reception of the ultrasonic measurement pulse signal (19), whereby dt2 = 0, and the time t that the ultra-sonic measurement signal takes to traverse the measurement path is determined from t = dt1 + nT.

**Patentansprüche**

**1.** Ultraschall-Gasdurchflussmessgerät, wobei das Messgerät umfasst:

eine Messstrecke;

erste (18) und zweite (20) Ultraschall-Messwandlerelemente, die betrieben werden können, um ein Ultraschall-Impulsmesssignal (19) über die Messstrecke zu übertragen beziehungsweise zu empfangen;

ein elektrischer Steuerschaltkreis, der mit den ersten und zweiten Messwandlerelementen gekoppelt ist und betrieben werden kann, um die Zeit zu ermitteln, die das Ultraschall-Impulsmesssignal (19) zum Durchlaufen der Messstrecke benötigt, und dadurch einen Gasdurchfluss zu ermitteln; wobei der Steuerschaltkreis umfasst:

einen Impulssignalgenerator zum Generieren eines Impulssignals (ii) und einen Rechteckwellengenerator, um Rechteckwellensignale (i) mit einer Dauer 2T zu generieren;

wobei das Impulssignal bewirkt, dass der erste Ultraschall-Signalgenerator (18) ein Ultraschall-Impulsmesssignal (19) überträgt, wobei das Ultraschall-Impulsmesssignal von dem zweiten Ultraschall-Messwandler (20) empfangen wird, um ein Empfangssignal (iii) bereitzustellen; und

ein Zeitgeberschaltkreis, der einen Rampensignalgenerator (14) und einen Abtast- und Halte-Schaltkreis (16) umfasst;

**dadurch gekennzeichnet, dass** der Rampensignalgenerator (14) an den Rechteckwellengenerator gekoppelt ist zum Generieren eines entsprechenden kontinuierlichen, eine Rampenwellenform aufweisenden Rampensignals (iv); dadurch, dass

der Abtast-Halte-Schaltkreis (16) gekoppelt ist zum Empfangen des Rampensignals (iv) und des Impulssignals (ii) und/oder des Empfangssignals; dadurch, dass

der Steuerschaltkreis betrieben werden kann, um die Zeit t, die das Ultraschall-Messsignal (19) zum Durchlaufen der Messstrecke benötigt, mittels t = dt1 + nT + dt2 zu ermitteln, wobei

dt1 ein Zeitintervall ist, sofern vorhanden, zwischen dem Impulssignal (ii) und einem ersten Auftreten eines Rechteckwellenübergangs, der aus einem Wert einer Eigenschaft des Partialrechteckwellenübergangs zur Zeit einer Übertragung des Ultraschall-Messsignals (19) ermittelt wurde;

nT eine Ganzzahl (n) von Halbwellenperioden (T) ist, wie durch die Anzahl der vor dem Empfangssignal (iii) auftretenden Rechteckwellensignalübergänge ermittelt; und

dt2 ein Zeitintervall zwischen dem Empfangssignal und dem letzten Rechteckwellenübergang ist, der aus einem Wert einer Eigenschaft des Partialrechteckwellenübergangs zur Zeit des Empfangs des Ultraschall-Messsignals (19) ermittelt wurde, und dadurch, dass

der Rampensignalgenerator (14) ein Rampenspannungssignalgenerator ist und die Eigenschaft des Partialrechteckwellenübergangs Spannung ist, wobei der Wert der Spannung der Partialrechteckwelle integriert wird, um das Rampenspannungssignal (iv) zu generieren.

2. Gerät nach Anspruch 1, wobei das Ultraschall-Messsignal (19) gleichzeitig mit einem Übergang in der Rechteckwelle (i) übertragen wird, wobei dt1 = 0; und wobei die Zeit t, die das Ultraschall-Messsignal zum Durchlaufen der Messstrecke benötigt, aus t = nT + dt2 ermittelt wird.

3. Gerät nach Anspruch 1, wobei das Ultraschall-Messsignal (19) gleichzeitig mit einem Übergang in der Rechteckwelle (i) empfangen wird, wonach dt2 = 0, und die Zeit t, die das Ultraschall-Messsignal zum Durchlaufen der Messstrecke benötigt, aus t = dt1 + nT ermittelt wird.

4. Gerät nach einem der Ansprüche 1 bis 3, wobei das Rampenspannungssignal (iv) von einem Kondensator bereitgestellt wird, der abwechselnd in linearer Weise geladen und entladen wird.

5. Gerät nach einem der Ansprüche 1 bis 3, wobei die Minimalspannung (Vmin) und die Maximalspannung (Vmax) periodisch bestimmt werden, um Änderungen aufgrund von Temperatur und/oder Altern zu berücksichtigen.

6. Gerät nach einem der Ansprüche 1 bis 5, wobei der Rechteckwellenimpuls (i) nicht aus einem 50/50-Betriebszyklus stammt.

7. Gerät nach einem der Ansprüche 1 bis 6, wobei das Gerät ein Haustechnikmessgerät ist.

8. Verfahren zum Messen des Gasdurchflusses in einem Ultraschall-Gasdurchflussmessgerät, umfassend:

erste (18) und zweite (20) Ultraschall-Messwandlerelemente, die betrieben werden können, um ein Ultraschall-Impulsmesssignal (19) über eine Messstrecke zu übertragen beziehungsweise zu empfangen;

ein elektrischer Steuerschaltkreis, der mit den ersten und zweiten Messwandlerelementen gekoppelt ist und betrieben werden kann, um die Zeit zu bestimmen, die ein Ultraschallimpulsmesssignal zum Durchlaufen der Messstrecke benötigt, um dadurch einen Gasdurchfluss zu ermitteln, und

ein Zeitgeberschaltkreis, der einen Rampensignalgenerator (14) und einen Abtast-Halte-Schaltkreis (16) umfasst;

wobei das Verfahren die folgenden Schritte umfasst:

Generieren eines Impulssignals (ii) und Generieren einer Rechteckwelle (i) mit der Dauer 2T;

Übertragen des Ultraschallimpulsmesssignals mittels des ersten Ultraschall-Messwandlerelements (18) über die Messstrecke;

Empfangen des Ultraschallimpulsmesssignals (19) mittels des zweiten Ultraschall-Messwandlers (20), um ein Empfangssignal (iii) bereitzustellen;

**gekennzeichnet durch die folgenden Schritte:**

Koppeln des Rampensignalgenerators (14) an den Rechteckwellengenerator zum Generieren eines entsprechenden kontinuierlichen, eine Rampenwellenform aufweisenden Rampensignals (iv);

Koppeln des Abtast-Halte-Schaltkreises (16) zum Empfangen des Rampensignals (iv) und des Empfangssignals (iii);

Betreiben des Steuerschaltkreises, um die Zeit t zu ermitteln, die das Ultraschall-Messsignal (19) zum Durchlaufen der Messstrecke benötigt, mittels t = dt1 + nT + dt2, wobei

dt1 ein Zeitintervall ist, sofern vorhanden, zwischen dem Übertragen des Impulssignals (ii) und einem ersten Auftreten eines Rechteckwellenübergangs, der aus einem Wert einer Eigenschaft des Partialrechteckwellenübergangs zur Zeit einer Übertragung des Ultraschall-Messsignals (19) ermittelt wurde;

nT eine Ganzzahl (n) von Halbwellenperioden (T) ist, wie durch die Anzahl der vor dem Empfangssignal (iii) auftretenden Rechteckwellensignalübergänge ermittelt; und

dt2 ein Zeitintervall zwischen dem Empfangssignal (iii) und dem letzten Rechteckwellenübergang ist, der aus einem Wert einer Eigenschaft des Partialrechteckwellenübergangs zur Zeit des Empfangs des Ultraschall-Messsignals (19) ermittelt wurde;

wobei der Rampensignalgenerator (14) ein Rampenspannungssignalgenerator ist und wobei die Eigenschaft des Partialrechteckwellenübergangs (i) Spannung ist, wobei das Verfahren ferner den folgenden Schritt umfasst: Integrieren des Wertes der Partialrechteckwellenspannung (i) wie bei Beendigung des Messzyklus ermittelt, um das Rampenspannungssignal (iv) zu produzieren, und daraus Bestimmen des jeweiligen Zeitintervalls dt1 und/oder dt2.

9. Verfahren nach Anspruch 8, wobei ein Übergang des Rechteckwellenimpulses (i) zeitlich mit der Übertragung des Ultraschallmessimpulssignals (19) korreliert ist, so dass dt1 = 0, und wobei die Zeit t, die das Ultraschallmesssignal zum Durchlaufen der Messstrecke benötigt, aus t = nT + dt2 ermittelt wird.

10. Verfahren nach Anspruch 8, wobei ein Übergang des Rechteckwellenimpulses (i) zeitlich mit dem Empfang des Ultraschallmessimpulssignals (19) korreliert ist, wonach dt2 = 0, und die Zeit t, die das Ultraschallmesssignal zum Durchlaufen der Messstrecke benötigt, aus t = dt1 + nT ermittelt wird.

## Revendications

1. Dispositif de mesure de débit de gaz à ultrasons, le dispositif de mesure comprenant :

un chemin de mesure ;

des premier (18) et second (20) éléments de transducteur ultrasonore fonctionnels pour, respectivement, émettre et recevoir un signal de mesure d'impulsion ultrasonore (19) à travers le chemin de mesure ;

un circuit de commande électrique, couplé aux premier et second éléments de transducteur et fonctionnels pour déterminer le temps que le signal de mesure d'impulsion ultrasonore (19) prend pour traverser le chemin de mesure, au moyen duquel déterminer un débit de gaz ;

dans lequel le circuit de commande comprend :

un générateur de signal d'impulsion pour générer un signal d'impulsion (ii), et un générateur d'onde carrée pour produire des signaux à onde carrée (i) de durée 2T;

le signal d'impulsion amenant le premier générateur de signal ultrasonore (18) à émettre un signal de mesure d'impulsion ultrasonore (19), lequel signal de mesure d'impulsion ultrasonore est reçu par le second transducteur ultrasonore (20) pour fournir un signal de réception (iii) ; et

un circuit de temporisation comprenant un générateur de signal de rampe (14) et un circuit d'échantillonnage et de mémorisation (16) ;

**caractérisé par le fait que** le générateur de signal de rampe (14) est couplé au générateur d'onde carrée pour générer un signal de rampe continu correspondant (iv) ayant une forme d'onde de rampe ;
**par le fait que** le circuit d'échantillonnage et de mémorisation (16) est couplé pour recevoir le signal de rampe (iv) et le signal d'impulsion (ii) et/ou le signal de réception ;
**par le fait que** le circuit de commande est fonctionnel pour déterminer le temps t que le signal de mesure ultrasonore (19) prend pour traverser le chemin de mesure à l'aide de

$$t = dt1 + nT + dt2,$$

où

dt1 est un intervalle de temps, s'il existe, entre le signal d'impulsion (ii) et une première survenue de transition d'onde carrée déterminé à partir d'une valeur d'une caractéristique de la transition d'onde carrée partielle au temps d'émission du signal de mesure ultrasonore (19) ;
nT est un nombre entier (n) de périodes de demi-onde (T) telles que déterminées par le nombre de transitions de signal à onde carrée se produisant avant le signal de réception (iii) ; et
dt2 est un intervalle de temps entre le signal de réception et la dernière transition d'onde carrée déterminée à partir d'une valeur d'une caractéristique de la transition d'onde carrée partielle au temps de réception du signal de mesure ultrasonore (19),

et **par le fait que** le générateur de signal de rampe (14) est un générateur de signal de tension de rampe et la caractéristique de la transition d'onde carrée partielle est une tension, la valeur de la tension de l'onde carrée partielle étant intégrée pour produire le signal de tension de rampe (iv).

2. Dispositif selon la revendication 1, dans lequel le signal de mesure ultrasonore (19) est émis simultanément avec une transition dans l'onde carrée (i), de telle sorte que dt1 = 0 ; et dans lequel le temps t que le signal de mesure ultrasonore prend pour traverser le chemin de mesure est déterminé à partir de t = nT + dt2.

3. Dispositif selon la revendication 1, dans lequel le signal de mesure ultrasonore (19) est reçu simultanément avec une transition dans l'onde carrée (i), de telle sorte que dt2 = 0, et le temps t que le signal de mesure ultrasonore prend pour traverser le chemin de mesure est déterminé à partir de t = dt1 + nT.

4. Dispositif selon l'une quelconque des revendications 1 à 3, dans lequel le signal de tension de rampe (iv) est fourni par un condensateur qui est chargé et déchargé de manière alternée d'une manière linéaire.

5. Dispositif selon l'une quelconque des revendications 1 à 3, dans lequel les tensions minimale (Vmin) et maximale (Vmax) sont déterminées périodiquement pour permettre des changements en raison de la température et/ou du vieillissement.

6. Dispositif selon l'une quelconque des revendications 1 à 5, dans lequel l'impulsion à onde carrée (i) n'est pas d'un rapport cyclique 50/50.

7. Dispositif selon l'une quelconque des revendications 1 à 6, dans lequel le dispositif est un compteur d'utilité domestique.

8. Procédé de mesure du débit de gaz dans un dispositif de mesure de débit de gaz à ultrasons comprenant

des premier (18) et second (20) éléments de transducteur ultrasonore fonctionnels pour, respectivement, émettre et recevoir un signal de mesure d'impulsion ultrasonore (19) à travers un chemin de mesure ;
un circuit de commande électrique, couplé aux premier et second éléments de transducteur et fonctionnels pour déterminer le temps qu'un signal de mesure d'impulsion ultrasonore prend pour traverser le chemin de mesure, au moyen duquel déterminer un débit de gaz, et
un circuit de temporisation comprenant un générateur de signal de rampe (14) et un circuit d'échantillonnage et de mémorisation (16) ;
le procédé comprenant les étapes consistant à :

générer un signal d'impulsion (ii) et générer une onde carrée (i) de durée 2T ;
émettre au moyen du premier élément de transducteur ultrasonore (18) le signal de mesure d'impulsion ultrasonore à travers le chemin de mesure ;
recevoir le signal de mesure d'impulsion ultrasonore (19) au moyen du second transducteur ultrasonore (20) pour fournir un signal de réception (iii) ;
**caractérisé par les étapes consistant à :**

coupler le générateur de signal de rampe (14) au générateur d'onde carrée pour générer un signal de rampe continu correspondant (iv) ayant une forme d'onde de rampe ;

coupler le circuit d'échantillonnage et de mémorisation (16) pour recevoir le signal de rampe (iv) et le signal de réception (iii) ;

commander le circuit de commande pour déterminer le temps t que le signal de mesure ultrasonore (19) prend pour traverser le chemin de mesure à l'aide de

$$t = dt1 + nt + dt2,$$

où

dt1 est un intervalle de temps, s'il existe, entre l'émission du signal d'impulsion et une première survenue de transition d'onde carrée déterminée à partir d'une valeur d'une caractéristique de la transition d'onde carrée partielle au temps d'émission du signal de mesure ultrasonore (19) ;

nT est un (n) de périodes de demi-onde (T) telles que déterminées par le nombre de transitions de signal à onde carrée se produisant avant le signal de réception (iii) ; et

dt2 est un intervalle de temps entre le signal de réception (iii) et la dernière transition d'onde carrée déterminée à partir d'une valeur d'une caractéristique de la transition d'onde carrée partielle au temps d'émission au temps de réception du signal de mesure ultrasonore (19) ;

dans lequel le générateur de signal de rampe (14) est un générateur de signal de tension de rampe et dans lequel la caractéristique de la transition d'onde carrée partielle (i) est une tension, le procédé comprenant en outre, l'étape consistant à intégrer la valeur de la tension d'onde carrée partielle (i) telle que déterminée après achèvement du cycle de mesure pour produire le signal de tension de rampe (iv), et à déterminer à partir de celle-ci l'intervalle de temps respectif dt1 et/ou dt2.

9. Procédé selon la revendication 8, dans lequel une transition de l'impulsion d'onde carrée (i) est corrélée dans le temps avec l'émission du signal d'impulsion de mesure ultrasonore (19), de telle sorte que dt1 = 0 et dans lequel le temps t que le signal de mesure ultrasonore prend pour traverser le chemin de mesure est déterminé à partir de t = nT + dt2.

10. Procédé selon la revendication 8, dans lequel une transition de l'impulsion d'onde carrée (i) est corrélée dans le temps avec la réception du signal d'impulsion de mesure ultrasonore (19), de telle sorte que dt2 = 0, et le temps t que le signal de mesure ultrasonore prend pour traverser le chemin de mesure est déterminé à partir de t = dt1 + nT.

FIGURE 1

Received pulse  (iii)

T

Square wave (i)

dt2

Vmax

Ramp voltage (iv)

AtoD count proportional to V

dt2 proportional to V

Vmin

V

EP 1 798 529 B1

**EP 1 798 529 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 3898878 A
- US 3329017 A
- US 4583410 A
- US 3623363 A